# FASCICULE DE BREVET EUROPEEN

(11) **EP 3 766 677 B1**
(45) Date de publication et mention de la délivrance du brevet: **15.12.2021**
(21) Numéro de dépôt: 20184138.4
(22) Date de dépôt: 06.07.2020
(51) Int. Cl.: B29C 70/82, B29C 70/88, E05F 15/46, B29C 65/00, B29C 65/08, B29C 65/64, B29L 31/34, B60R 16/02

(54) **PROCÉDÉ DE FABRICATION D'UN ÉLÉMENT DE CARROSSERIE MUNI D'UNE PISTE CONDUCTRICE**
VERFAHREN ZUR HERSTELLUNG EINES KAROSSERIEELEMENTS, DAS MIT EINER LEITUNGSBAHN AUSGESTATTET IST
METHOD FOR MANUFACTURING A BODYWORK ELEMENT PROVIDED WITH A CONDUCTIVE TRACK

(30) Priorité: 15.07.2019 FR 1907967
(43) Date de publication de la demande: 20.01.2021
(73) Titulaire: Compagnie Plastic Omnium SE, 69007 Lyon (FR)
(72) Inventeur: TRESSE, David, 01150 SAINTE-JULIE (FR); SELMANE, Ismael, 01150 SAINTE-JULIE (FR)
(74) Mandataire: LLR

(56) Documents cités:
- FR-A1- 3 030 342
- US-A1- 2002 040 898
- US-A1- 2006 232 972
- US-A1- 2014 268 604

## Description

L'invention concerne le domaine de la fabrication d'un élément de carrosserie en matière plastique destiné à être monté sur une pièce de carrosserie de véhicule automobile.

De nombreux véhicules modernes sont équipés de pièces de de carrosserie en matière plastique pouvant équiper par exemple un hayon arrière, un flanc de portière, des pare-chocs avant et arrière, etc.

Depuis l'introduction des systèmes d'assistance à la conduite, il est devenu nécessaire de placer sur certaines de ces pièces de carrosserie des capteurs de différentes sortes. A titre d'exemple, les pare-chocs sont désormais fréquemment équipés de radars de proximité qui permettent d'assister le conducteur lors des phases de manœuvre de stationnement du véhicule automobile à basse vitesse.

De manière à dissimuler ces capteurs et de les protéger des agressions extérieures, on rapporte sur la pièce de carrosserie concernée un élément de carrosserie transparent aux ondes électromagnétiques, désigné le plus souvent par le terme de radôme.

Dans la mesure où les capteurs peuvent voir leur fonctionnement normal déréglé par la présence d'une couche de glace pouvant se déposer sur le radôme et venir perturber le passage normal des ondes électromagnétiques, il est couramment prévu d'intégrer un système de dégivrage du capteur intégré dans le radôme.

Un tel système de dégivrage est le plus souvent formé d'une piste conductrice constituée de fils capables de transformer une énergie électrique en énergie thermique, associée à deux plaques de connexion à chaque extrémité de la piste chauffante afin de l'alimenter en un courant électrique. L'énergie thermique ainsi dégagée permet de dégivrer localement la pièce.

La piste conductrice est en général fabriquée par dépose d'un fil conducteur dans une matrice en matière plastique, laquelle est rapportée sur un élément plastique, l'ensemble formant le corps du radôme. Le fil conducteur est constitué d'une âme, le plus souvent en cuivre, revêtue d'un revêtement, réalisé habituellement à partir de polyamide ou en polyuréthane. Le revêtement assure à la fois une fonction de prévention de l'oxydation de l'âme, mais également une fonction esthétique, puisqu'il est choisi d'une couleur similaire à celle de la matrice ou en matériau transparent pour dissimuler la présence du fil dans l'élément de carrosserie. En effet, afin d'assurer un dégivrage efficace, le fil conducteur doit être disposé en surface de l'élément de carrosserie, ce qui le rend apparent.

Le document US 2014/268604 A1 décrit un procédé selon le préambule de la revendication 1 où l'on dépose un fil conducteur dans une matrice en matière plastique de sorte à former une piste conductrice dans la matrice.

Une fois intégré dans la matrice, le fil conducteur est connecté à une source d'alimentation en courant électrique de la piste conductrice dans une zone de connexion de la piste conductrice. Pour ce faire, il est habituellement prévu de souder une portion du fil conducteur se trouvant dans la zone de connexion à un élément de connexion relié à la source d'alimentation, par exemple, un autre fil conducteur.

A l'heure actuelle, on utilise une technique de soudage particulière permettant de provoquer la sublimation du revêtement pour dénuder l'âme, et de souder l'âme en matériau conducteur à l'élément de connexion de façon quasiment simultanée. Cependant, cette opération présente le désavantage de créer une pollution de la zone de connexion, constituée par les débris du revêtement ainsi retiré. De plus, la soudure ainsi obtenue n'est pas nette. Enfin, devoir utiliser pareille technique de soudage limite les possibilités de connexion.

Il existe donc un besoin d'améliorer le procédé de fabrication de l'élément de carrosserie muni d'une piste conductrice.

A cet effet, l'invention a pour objet un procédé de fabrication d'un élément de carrosserie destiné à être monté sur une pièce de carrosserie de véhicule automobile, l'élément de carrosserie comprenant une matrice en matière plastique, comprenant les étapes suivantes :
- fourniture d'un fil conducteur muni d'un revêtement, le revêtement étant réalisé dans un matériau distinct du matériau constitutif du fil conducteur, et
- dépose du fil conducteur dans la matrice en matière plastique de sorte à former une piste conductrice dans la matrice,
**caractérisé en ce qu'il** comprend, après l'étape de fourniture du fil conducteur, et avant l'étape de dépose du fil conducteur, une étape de dénudage local du revêtement du fil conducteur dans une zone prédéterminée du fil conducteur.

En dénudant le fil conducteur avant sa dépose dans la matrice, on évite non seulement toute pollution de la zone de connexion constituée par les débris du revêtement ainsi retiré, mais il devient également possible d'utiliser des techniques de connexion du fil conducteur à une source d'alimentation beaucoup plus variées.

Selon un mode de réalisation particulier de l'invention, le procédé comprend une étape dans laquelle on rapporte la matrice plastique sur un élément en matière plastique.

Selon une variante, l'élément en matière plastique est rapporté par surmoulage sur la matrice plastique.

Selon une autre variante, l'élément en matière plastique est rapporté par adhésion de la matrice plastique.

Avantageusement, la zone prédéterminée du fil conducteur est choisie de sorte que, une fois le fil conducteur déposé dans la matrice, elle se trouve à l'intérieur d'une zone de connexion de la piste conductrice à une source d'alimentation en courant électrique.

De préférence, le dénudage local du revêtement du fil conducteur se fait par chauffage, abrasion, ou attaque chimique du revêtement.

Dans le cas où dénudage se fait par chauffage, la température de chauffage est au moins égale à une température de sublimation du matériau constitutif du revêtement. Provoquer la sublimation du matériau constitutif du revêtement permet en effet d'obtenir un dénudage net et de limiter les débris de revêtement.

De sorte à limiter la dégradation de l'âme lors du chauffage du revêtement, la température de chauffage est inférieure à une température de fusion du matériau constitutif de l'âme.

Afin de contrôler avec précision le positionnement du fil conducteur dans la matrice, la dépose du fil conducteur dans la matrice se fait par encastrement du fil conducteur dans un sillon pratiqué dans la matrice.

Avantageusement, l'encastrement du fil conducteur dans la matrice comprend les étapes suivantes :
- insertion d'une portion du fil conducteur dans une cavité d'une extrémité libre d'une sonotrode ;
- application de vibrations ultrasoniques à la sonotrode de sorte à créer le sillon dans la matrice en plastique ;
- insertion du fil dans le sillon ainsi créé.

Ce procédé permet de créer le sillon dans la matrice et d'y encastrer le fil de façon presque simultanée, le rendant à la fois rapide et fiable.

La piste conductrice suit de préférence un chemin en forme de boustrophédon. Cette géométrie particulière permet de limiter la perturbation du passage des ondes électromagnétiques à travers l'élément de carrosserie lorsque celui-ci à la fonction de radôme protégeant un capteur.

Selon des modes de réalisations particuliers, la piste conductrice de l'élément de carrosserie est un élément chauffant ou un élément capacitif de l'élément de carrosserie.

Dans le cas où l'élément de carrosserie a pour fonction de dissimuler un capteur et de le protéger des agressions extérieures, la piste conductrice est par exemple un élément chauffant destiné à être intégré dans un dispositif de dégivrage du capteur. Dans d'autre cas, la piste conductrice est par exemple un élément capacitif permettant la détection d'objets ou de la présence de la main d'un utilisateur.

L'invention a également pour objet un élément carrosserie comprenant une matrice en matière plastique dans laquelle est encastré un fil conducteur muni d'un revêtement, **caractérisé en ce qu'il** est fabriqué à l'aide du procédé de fabrication selon l'une quelconque des revendications précédentes.

### Brève description des figures

L'invention sera mieux comprise à la lecture de la description qui va suivre donnée uniquement à titre d'exemple et faite en se référant aux dessins annexés dans lesquels :
[Fig. 1] La figure 1 est une vue en perspective d'un détail d'un élément de carrosserie fabriqué à l'aide du procédé selon l'invention ;
[Fig. 2] La figure 2 est une vue schématique en coupe d'une sonotrode et d'un fil conducteur destiné à être déposé dans une matrice en plastique de l'élément de carrosserie de la figure 1, avant l'étape de dénudage du procédé selon l'invention ;
[Fig. 3] La figure 3 est une vue schématique en coupe d'une sonotrode et d'un fil conducteur similaires à ceux de la figure 2 et de moyens de chauffage au cours de l'étape de dénudage du procédé selon l'invention ;
[Fig. 4] La figure 4 est une vue schématique en coupe similaire à la figure 2 au cours de l'étape de dépose du procédé selon l'invention ;
[Fig. 5] La figure 5 est une vue schématique en coupe similaire à la figure 2 à un stade ultérieur de l'étape de dépose du procédé selon l'invention.

### Description détaillée

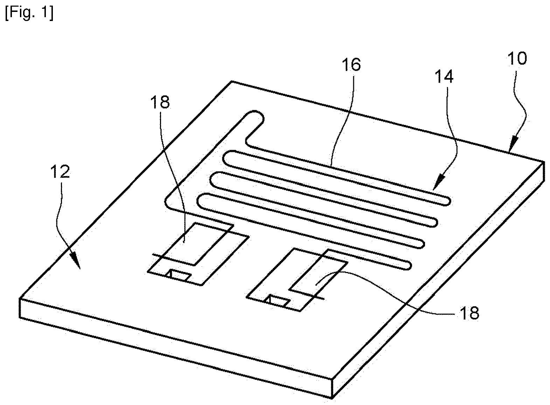

On a représenté à la figure 1 un élément de carrosserie destiné à être monté sur une pièce de carrosserie de véhicule automobile (non représentée), désigné par la référence générale 10. L'élément de carrosserie 10 peut par exemple équipe un hayon arrière, un flanc de portière, des pare-chocs avant et/ou arrière, etc.

L'élément de carrosserie 10 est muni d'une matrice en matière plastique 12, qui dans l'exemple représenté à la figure 1 est sensiblement plane de sorte à épouser la paroi de la pièce de carrosserie sur laquelle l'élément de carrosserie 10 est destiné à être monté. La matière plastique est par exemple du polycarbonate, du polyamide ou du polypropylène. La forme carrée prise par la matrice 12 représentée à la figure 1 n'est qu'un exemple nullement limitatif.

Dans un mode de réalisation particulier, on rapporte la matrice plastique 12 sur un élément en matière plastique (non représenté pour des raisons de clarté).

Selon une variante, l'élément en matière plastique est rapporté par surmoulage sur la matrice plastique 12. Selon une autre variante, l'élément en matière plastique est rapporté par adhésion de la matrice plastique 12.

La matrice 12 comprend, sur une de ses faces, une piste conductrice 14, comprenant un fil conducteur 16 suivant un chemin passant ou partant d'une zone de connexion 18.

La piste conductrice 14 est, selon la fonction de l'élément de carrosserie 10, un élément chauffant ou un élément capacitif ou de l'élément de carrosserie 10. Dans le cas où l'élément de carrosserie 10 a pour fonction de dissimuler un capteur et de le protéger des agressions extérieures, la piste conductrice 14 est par exemple un élément chauffant destiné à être intégré dans un dispositif de dégivrage du capteur. Dans d'autre cas, la piste conductrice 14 est par exemple un élément capacitif permettant la détection d'objets ou de la présence de la main d'un utilisateur.

On entend par zones de connexion 18 une zone de la matrice 12 dans lesquelles la piste conductrice 14 est reliée à une source d'alimentation en électricité. Dans le mode de réalisation représenté à la figure 1, une zone de connexion prend la forme d'une plaque de connexion aménagée dans un logement de la matrice 12.

En l'occurrence, le fil conducteur 16 suit le chemin de sorte à relier deux zones de connexion 18.

Dans le mode de réalisation préféré illustré sur les figures, le chemin suivi par la piste conductrice 14 est en forme de boustrophédon, ou « en serpentin ». Il s'agit en effet d'une disposition qui est compatible avec le passage d'ondes électromagnétiques. En outre, cette forme permet d'augmenter le plus possible la surface de conduction de chaleur dans la surface de la face de la matrice 12.

De préférence, le fil conducteur 16 est encastré dans la matrice 12 dans un sillon pratiqué dans la matrice 12. Ce sillon (non visible sur la figure 1 car comblé par le fil) peut notamment être créé au moment de l'encastrement du fil conducteur 16 dans la matrice 12.

Le fil conducteur 16 comprend, de façon classique, une âme en matériau conducteur revêtue d'un revêtement. Le revêtement est réalisé dans un matériau distinct du matériau constitutif de l'âme.

L'âme est par exemple réalisée à base de cuivre ou d'un alliage ayant pour composant majoritaire le cuivre.

Le revêtement est quant à lui réalisé dans un matériau non conducteur, généralement en matériau plastique, par exemple à base de polyamide ou de polyuréthane. Le revêtement assure à la fois une fonction de prévention de l'oxydation de l'âme, mais également une fonction esthétique, puisqu'il est choisi d'une couleur similaire à celle de la matrice ou en matériau transparent pour dissimuler la présence du fil dans l'élément de carrosserie 10.

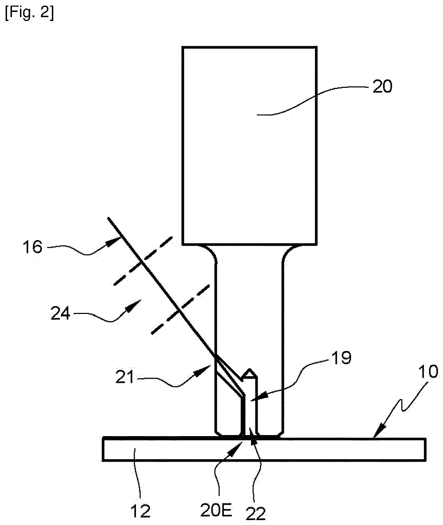

On va maintenant décrire un procédé de fabrication de l'élément de carrosserie 10 selon l'invention en référence aux figures 2 à 4.

Au cours d'une première étape, on fournit un fil conducteur 16 tel que défini ci-dessus. De façon classique, ce fil conducteur 16 peut provenir d'une bobine.

Le fil conducteur 16 est déroulé progressivement pour qu'il soit déposé dans la matrice en matière plastique 12, de sorte à former la piste conductrice 14.

Comme on le verra plus loin, la dépose du fil conducteur 16 dans la matrice 12 se fait par encastrement du fil conducteur 16 dans un sillon (non visible sur les figures) pratiqué dans la matrice 12. La dépose par encastrement permet en effet de contrôler avec précision le positionnement du fil conducteur 16 dans la matrice 12.

Il est par ailleurs préférable, que la piste conductrice 14 soit un élément chauffant ou un élément capacitif, qu'elle se trouve insérée dans la matrice 12 peu profondément dans une de ses surfaces libres afin d'affleurer le plus possible au reste de la surface libre de la matrice 12 pour correctement remplir ses fonctions. Dans les deux cas en effet, elle doit se trouver en effet à proximité de la surface de l'élément de carrosserie 10 portant le capteur pour y faire fondre la glace qui s'y serait déposée, ou de la surface de l'élément de carrosserie 10 portant le capteur permettant de détecter la présence d'un obstacle tel que la main d'un utilisateur.

Dans le mode de réalisation préféré de l'invention illustré aux figures 1 à 4, l'encastrement du fil conducteur 16 dans la matrice 12 se fait par, dans un premier temps, en insérant une portion du fil conducteur 16 dans une cavité 19 d'une extrémité libre d'une sonotrode 20.

Plus précisément, le fil conducteur 16, par exemple l'extrémité libre de la bobine de fil conducteur 16, est inséré dans la cavité 19 par un premier orifice 21 et débouche par un second orifice 22 pratiqué dans l'extrémité libre 20E de la sonotrode 20. Cet état est représenté à la figure 2.

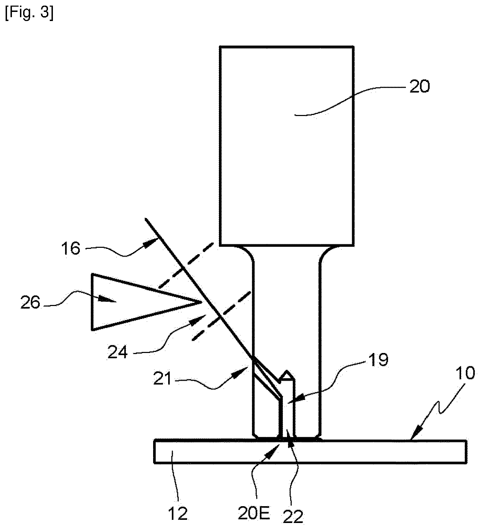

Après l'état de fourniture du fil conducteur 16, et avant l'étape de dépose du fil conducteur 16, on procède à une étape de dénudage local du revêtement du fil conducteur 16 dans une zone prédéterminée 24 du fil conducteur 16. Cette étape est illustrée à la figure 3, la zone prédéterminée 24 du fil conducteur 16 étant délimitée du reste du fil conducteur 16 sur les figures par des pointillés sur les figures 2 à 4.

La zone prédéterminée 24 du fil conducteur 16 est choisie de sorte que, une fois le fil conducteur 16 déposé dans la matrice 12, elle se trouve à l'intérieur de la zone de connexion 18 de la piste conductrice 14 à une source d'alimentation en courant électrique. Connaissant le chemin pris par le fil conducteur 16 pour former la piste conductrice 14, il est en effet possible de choisir la zone prédéterminée 24 du fil conducteur 16 avant sa dépose sur la matrice 12 pour qu'elle coïncide avec la zone de connexion 18 une fois le fil conducteur 16 en place dans la matrice 12.

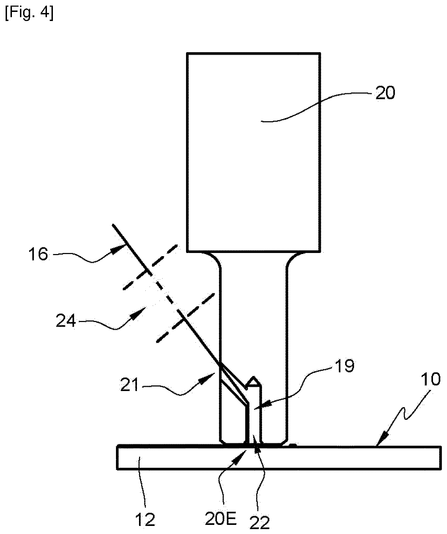

De préférence, le dénudage du revêtement du fil conducteur 16 se fait avant son insertion dans la sonotrode 20, comme on peut le voir à la figure 4 qui illustre la zone prédéterminée 24 du fil conducteur dénudée en pointillés.

Le dénudage local du revêtement du fil conducteur 16 peut se faire par chauffage, abrasion, ou attaque chimique du revêtement.

De préférence, le dénudage se fait par chauffage, par exemple à l'aide de moyens de chauffage 26 prenant ici la forme d'un laser, de souffleuse d'air chaud, de dispositif à induction ou de chauffage par contact.

La température de chauffage est au moins égale à une température de sublimation du matériau constitutif du revêtement, par exemple plus de 370°C.

La température de chauffage est également de préférence inférieure à une température de fusion du matériau constitutif de l'âme du fil conducteur. Par exemple, la température de chauffage est inférieure à la température de fusion du cuivre, soit inférieure à 1085°C, de préférence inférieure à 700°C afin de de ne pas endommager l'âme du fil conducteur 16.

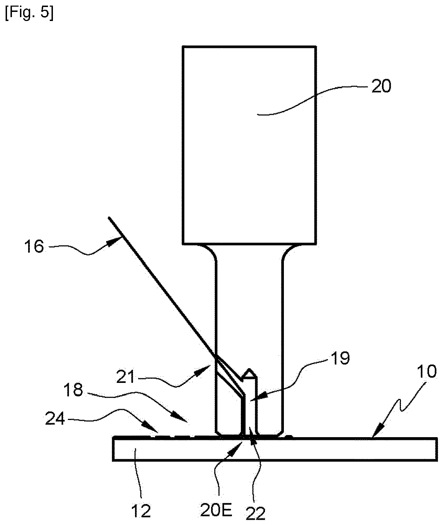

Après étape de dénudage local du revêtement du fil conducteur 16 dans une zone prédéterminée du fil conducteur 16, on applique des vibrations ultrasoniques à la sonotrode 20 de sorte à créer le sillon dans la matrice en plastique 12, et on insère le fil conducteur 16 dans le sillon ainsi créé. La figure 5 illustre l'état de la matrice en matière plastique une fois cette étape terminée, où la zone prédéterminée du fil conducteur 24 insérée dans la matrice est représentée en pointillés.

L'invention est définie par les revendications. L'élément de carrosserie, plutôt que d'être un élément destiné à chauffer, peut également être un élément capacitif permettant la détection d'objets ou de la présence de la main d'un utilisateur.

### Liste des références

- 10 :: Elément de carrosserie

- 12 :: Matrice en matière plastique
- 14 :: Piste conductrice
- 16 :: Fil conducteur
- 18 :: Zone de connexion
- 19 :: Cavité de la sonotrode
- 20 :: Sonotrode
- 20E :: Extrémité libre de la sonotrode
- 21 :: Premier orifice de la sonotrode
- 22 :: Second orifice de la sonotrode
- 24 :: Zone prédéterminée du fil conducteur
- 26 :: Moyens de chauffage

## Revendications

1. Procédé de fabrication d'un élément de carrosserie (10) destiné à être monté sur une pièce de carrosserie de véhicule automobile, l'élément de carrosserie (10) étant muni une matrice (12) en matière plastique, comprenant les étapes suivantes :
- fourniture d'un fil conducteur (16) comprenant une âme en matériau conducteur revêtue d'un revêtement, le revêtement étant réalisé dans un matériau distinct du matériau constitutif de l'âme,
- dépose du fil conducteur (16) dans la matrice en matière (12) plastique de sorte à former une piste conductrice (14) dans la matrice,
**caractérisé en ce qu'il** comprend, après l'étape de fourniture du fil conducteur (16), et avant l'étape de dépose du fil conducteur (16), une étape de dénudage local du revêtement du fil conducteur (16) dans une zone prédéterminée (24) du fil conducteur (16).

2. Procédé de fabrication d'un élément de carrosserie (10) selon la revendication 1, comprenant une étape dans laquelle on rapporte la matrice plastique (12) sur un élément en matière plastique.

3. Procédé de fabrication selon la revendication 2, dans lequel l'élément en matière plastique est rapporté par surmoulage sur la matrice plastique (12).

4. Procédé de fabrication selon la revendication 2, dans lequel l'élément en matière plastique est rapporté par adhésion de la matrice plastique (12).

5. Procédé de fabrication d'un élément de carrosserie (10) selon l'une quelconque des revendications précédentes, dans lequel la zone prédéterminée (24) du fil conducteur (16) est choisie de sorte que, une fois le fil conducteur (16) déposé dans la matrice (12), elle se trouve à l'intérieur d'une zone de connexion (18) de la piste conductrice (14) à une source d'alimentation en courant électrique.

6. Procédé de fabrication d'un élément de carrosserie (10) selon l'une quelconque des revendications précédentes, dans lequel le dénudage local du revêtement du fil conducteur (16) se fait par chauffage, abrasion, ou attaque chimique du revêtement.

7. Procédé de fabrication d'un élément de carrosserie selon la revendication 6, dans lequel le dénudage se faisant par chauffage, la température de chauffage est au moins égale à une température de sublimation du matériau constitutif du revêtement.

8. Procédé de fabrication d'un élément de carrosserie (10) selon la revendication 7, dans lequel la température de chauffage est inférieure à une température de fusion du matériau constitutif de l'âme du fil conducteur (16).

9. Procédé de fabrication d'un élément de carrosserie (10) selon l'une quelconque des revendications précédentes, dans lequel la dépose du fil conducteur (16) dans la matrice (12) se fait par encastrement du fil conducteur (16) dans un sillon pratiqué dans la matrice (12).

10. Procédé de fabrication d'un élément de carrosserie (10) selon l'une quelconque des revendications précédentes, dans lequel l'encastrement du fil conducteur (16) dans la matrice comprend les étapes suivantes :
- insertion d'une portion du fil conducteur (16) dans une cavité (19) d'une extrémité libre d'une sonotrode (20) ;
- application de vibrations ultrasoniques à la sonotrode (20) de sorte à créer le sillon dans la matrice en plastique (12) ;
- insertion du fil conducteur (16) dans le sillon ainsi créé.

11. Procédé de fabrication d'un élément de carrosserie (10) selon l'une quelconque des revendications précédentes, dans lequel la piste conductrice (14) suit un chemin en forme de boustrophédon.

12. Procédé de fabrication d'un élément de carrosserie (10) selon l'une quelconque des revendications précédentes, dans lequel la piste conductrice (14) est un élément chauffant ou un élément capacitif de l'élément de carrosserie (10).

13. Elément de carrosserie (10) comprenant une matrice (12) en matière plastique dans laquelle est encastré un fil conducteur (16) muni d'un revêtement, **caractérisé en ce qu'il** est fabriqué à l'aide du procédé de fabrication selon l'une quelconque des revendications précédentes.

## Patentansprüche

1. Verfahren zur Herstellung eines Karosserieelements (10), das dazu bestimmt ist, an einem Karosserieteil eines Kraftfahrzeugs angebracht zu werden, wobei das Karosserieelement (10) mit einer Kunststoffmatrix (12) versehen ist, aufweisend die folgenden Schritte:
- Bereitstellen eines leitfähigen Drahtes (16) mit einem Kern aus leitendem Material, der mit einer Beschichtung überzogen ist, wobei die Beschichtung aus einem Material besteht, das sich von dem den Kern bildenden Material unterscheidet
- Ablegen des leitfähigen Drahtes (16) in der Kunststoffmatrix (12), um eine Leiterbahn (14) in der Matrix zu bilden,
**dadurch gekennzeichnet, dass** es nach dem Schritt des Bereitstellens des leitfähigen Drahtes (16) und vor dem Schritt des Ablegens des leitfähigen Drahtes (16) einen Schritt des lokalen Ablösens der Beschichtung von dem leitfähigen Draht (16) in einem vorbestimmten Bereich (24) des leitfähigen Drahtes (16) aufweist.

2. Verfahren zur Herstellung eines Karosserieelements (10) nach Anspruch 1, aufweisend einen Schritt, bei dem die Kunststoffmatrix (12) auf ein Kunststoffteil aufgebracht wird.

3. Herstellungsverfahren nach Anspruch 2, wobei das Kunststoffelement auf die Kunststoffmatrix (12) aufgespritzt wird.

4. Herstellungsverfahren nach Anspruch 2, wobei das Kunststoffelement durch Adhäsion der Kunststoffmatrix (12) befestigt wird.

5. Verfahren zur Herstellung eines Karosserieelements (10) nach einem der vorhergehenden Ansprüche, wobei der vorbestimmte Bereich (24) des leitfähigen Drahtes (16) so gewählt wird, dass er sich nach dem Ablegen des leitfähigen Drahtes (16) in der Matrix (12) innerhalb eines Anschlussbereiches (18) der Leiterbahn (14) an einer elektrischen Stromquelle befindet.

6. Verfahren zur Herstellung eines Karosserieelements (10) nach einem der vorhergehenden Ansprüche, wobei das lokale Ablösen der Beschichtung des leitfähigen Drahtes (16) durch Erhitzen, Abschleifen oder Ätzen der Beschichtung erfolgt.

7. Verfahren zur Herstellung eines Karosserieelements nach Anspruch 6, bei dem das Ablösen durch Erhitzen erfolgt, wobei die Erhitzungstemperatur mindestens gleich der Sublimationstemperatur des Materials ist, das die Beschichtung bildet.

8. Verfahren zur Herstellung eines Karosserieelements (10) nach Anspruch 7, wobei die Erhitzungstemperatur niedriger ist als die Schmelztemperatur des Kernmaterials des leitfähigen Drahtes (16).

9. Verfahren zur Herstellung eines Karosserieelements (10) nach einem der vorhergehenden Ansprüche, wobei das Verlegen des leitfähigen Drahtes (16) in der Matrix (12) durch Einbetten des leitfähigen Drahtes (16) in eine Rille in der Matrix (12) erfolgt.

10. Verfahren zur Herstellung eines Karosserieelements (10) nach einem der vorhergehenden Ansprüche, wobei das Einbetten des leitfähigen Drahtes (16) in die Matrize die folgenden Schritte aufweist:
- Einführen eines Teils des leitfähigen Drahtes (16) in einen Hohlraum (19) eines freien Endes einer Sonotrode (20);
- Anwendung von Ultraschallschwingungen auf die Sonotrode (20), um die Rille in der Kunststoffmatrix (12) zu erzeugen;
- Einführen des leitfähigen Drahtes (16) in die so entstandene Rille.

11. Verfahren zur Herstellung eines Karosserieelements (10) nach einem der vorhergehenden Ansprüche, wobei die Leiterbahn (14) einer Bahn in Form eines Boustrophedons folgt.

12. Verfahren zur Herstellung eines Karosserieelements (10) nach einem der vorhergehenden Ansprüche, wobei die Leiterbahn (14) ein Heizelement oder ein kapazitives Element des Karosserieelements (10) ist.

13. Karosserieelement (10) aufweisend eine Kunststoffmatrix (12), in die ein mit einer Beschichtung versehener leitfähiger Draht (16) eingebettet ist, **dadurch gekennzeichnet, dass** es mittels des Herstellungsverfahrens nach einem der vorangehenden Ansprüche hergestellt ist.

## Claims

1. Method of manufacturing a bodywork element (10) intended to be mounted on a motor vehicle bodywork part, the bodywork element (10) being provided with a die (12) made of plastic material, comprising the following steps:
- supplying a conductive wire (16) comprising a core made of conductive material coated with a coating, the coating being made of a material distinct from the material constituting the core,
- depositing the conductive wire (16) in the matrix made of plastic material (12) so as to form a conductive track (14) in the matrix
**characterized in that it** comprises, after the step of supplying the conductive wire (16), and before the step of depositing the conductive wire (16), a step of locally stripping the coating of the conductive wire (16) in a predetermined zone (24) of the conductive wire (16).

2. A method of manufacturing a body part (10) according to claim 1, comprising a step in which the plastic matrix (12) is applied to a plastic part.

3. The manufacturing method according to claim 2, wherein the plastic element is overmolded onto the plastic matrix (12).

4. The manufacturing method according to claim 2, wherein the plastic element is attached by adhesion of the plastic matrix (12).

5. A method of manufacturing a body part (10) according to any one of the preceding claims, wherein the predetermined area (24) of the conductive wire (16) is selected such that, once the conductive wire (16) has been deposited in the matrix (12), it lies within an area (18) of connection to a source of electrical power of the conductive track (14).

6. A method of manufacturing a body member (10) according to any one of the preceding claims, wherein the local stripping of the coating of the conductive wire (16) is done by heating, abrading, or chemically etching the coating.

7. A method of manufacturing a body member according to claim 6, wherein when the stripping is done by heating, the heating temperature is at least equal to a sublimation temperature of the material constituting the coating.

8. A method of manufacturing a body member (10) according to claim 7, wherein the heating temperature is lower than a melting temperature of the material constituting the core of the lead wire (16).

9. A method of manufacturing a bodywork element (10) according to any one of the preceding claims, wherein the depositing of the conductive wire (16) in the matrix (12) is done by embedding the conductive wire (16) in a groove in the matrix (12).

10. A method of manufacturing a body element (10) according to any of the preceding claims, wherein embedding the conductive wire (16) in the matrix comprises the following steps:
- inserting a portion of the conductive wire (16) into a cavity (19) of a free end of a sonotrode (20);
- applying ultrasonic vibrations to the sonotrode (20) so as to create the groove in the plastic die (12);
- inserting the conductive wire (16) into the groove thusly created.

11. A method of manufacturing a body member (10) according to any one of the preceding claims, wherein the conductive track (14) follows a path in the form of a boustrophedon.

12. A method of manufacturing a body member (10) according to any of the preceding claims, wherein the conductive track (14) is a heating element or a capacitive element of the bodywork element (10).

13. A bodywork element (10) comprising a matrix (12) made of plastic material in which a conductive wire (16) provided with a coating is embedded, **characterized in that it** is manufactured by means of the manufacturing process according to any of the preceding claims.
